# EUROPÄISCHE PATENTANMELDUNG

(11) **EP 0 933 572 A2**
(43) Veröffentlichungstag der Anmeldung: **04.08.1999**
(21) Anmeldenummer: 99100805.3
(22) Anmeldetag: 18.01.1999
(51) Int. Cl.: F16K 27/02, F16K 1/10

(54) **Absperrarmatur für Wasserleitungen o.dgl.**

(30) Priorität: 03.02.1998 DE 19804114
(71) Anmelder: Schlösser Haustechnik GmbH, 57462 Olpe/Biggesee (DE)
(72) Erfinder: Rinscheid, Günter, 57482 Wenden-Römershagen (DE); Stach, Olaf, 57462 Olpe (DE)
(74) Vertreter: Pürckhauer, Rolf, Dipl.-Ing.

(57) **Zusammenfassung**

Es handelt sich um eine Absperrarmatur (1) für Wasserleitungen o.dgl. mit einem Gehäuse (2) und einem Ventil-Oberteil (9). Um die Absperrarmatur (1) so zu gestalten, daß keinerlei Korrosionsschäden an derselben auftreten, ist das Roh-Gehäuse mit einer vor der mechanischen Bearbeitung aufgebrachten korrosionsbeständigen Innenbeschichtung (16) versehen. Die Innenbeschichtung (16) kann entweder eine Pulverbeschichtung oder eine Tauchbeschichtung sein.

## Beschreibung

Die Erfindung bezieht sich auf eine Absperrarmatur für Wasserleitungen o.dgl. mit einem Gehäuse und einem Ventil-Oberteil.

Absperrarmaturen dienen dazu, einzelne Leitungsstränge des Hauswasserversorgungssystems abzusperren. In geöffnetem Zustand werden die Absperrarmaturen vom Wasserstrom durchspült, wobei im geschlossenen Zustand dieselben etwa zur Hälfte, d.h. bis zum Absperrorgan (Ventil-Oberteil) mit Wasser gefüllt sind.

Diese Absperrarmaturen werden an ihren Anschlußstutzen mit Wasserleitungsrohren oder anderen Armaturen, beispielsweise Wasserzählern, verbunden. Zumeist geschieht dies durch Schraubverbindungen, wobei erhebliche Zug- und Biegespannungen auf das Gehäuse der Absperrarmatur einwirken. Daher bestehen die Absperrarmaturen tiberwiegend aus Metall. Anwendung finden hier Gußmessing, Preßmessing sowie Rotguß.

Ein großes Problem beim Einsatz der Absperrarmaturen stellt die Korrosion durch das Wasser dar. Trinkwässer sind vielerorts chemisch nicht neutral, d.h. sie sind oft stark sauer. Der Kontakt der Innenflächen des Gehäuses mit dem Wasser kann zu Korrosion, die von innen nach außen wandert, führen. Dies geschieht oft in sehr kurzer Zeit, wobei die Absperrarmaturen dann nach außen Undichtigkeiten aufweisen und Wasser austritt. Dadurch können erhebliche Wasserschäden an und in Gebäuden entstehen, da sich die Absperrarmaturen zumeist in den Kellerräumen befinden, in denen sie kaum überwacht werden.

Die Kosten für die Auswechslung schadhafter Absperrarmaturen sind im Vergleich zu den Schäden, die durch das Wasser in und an Gebäuden entstehen können, sehr gering.

Es sind auch Absperrarmaturen aus korrosionsarmem Rotguß bekannt. Diese Absperrarmaturen sind jedoch erheblich teurer als Absperrarmaturen aus Messing.

Neben den Korrosionseffekten durch den Kontakt mit dem Leitungswasser können aus den Metall-Legierungen der Gehäuse Schwermetalle wie Blei, Zink oder Kupfer austreten und in das Trinkwasser gelangen. Dies führt mehr und mehr zu Problemen mit den Gesundheitsbehörden.

Um Korrosionsschäden zu vermeiden, wäre die Verwendung von Kunststoff als Werkstoff für die Absperrarmaturen denkbar. Dabei könnten jedoch die gewünschten mechanischen Festigkeits-Eigenschaften der Gehäuse der Absperrarmaturen nicht eingehalten werden.

Der Erfindung liegt daher die Aufgabe zugrunde, eine gattungsgemäße Absperrarmatur zu schaffen, die ohne wesentliche Erhöhung der Herstellungskosten gegen Korrosion weitestgehend geschützt ist.

Diese Aufgabe wird erfindungsgemaß dadurch gelöst, daß das Roh-Gehäuse mit einer vor der mechanischen Bearbeitung aufgebrachten korrosionsbeständigen Innenbeschichtung versehen ist.

Zweckmäßig für die Innenbeschichtung ist entweder eine Pulverbeschichtung oder eine Tauchbeschichtung.

Der besondere Vorteil der Erfindung ist darin zu sehen, daß keinerlei direkter Kontakt zwischen der Messing-Legierung des Gehäuses und Wasser besteht, so daß die vorgenannten Probleme nicht auftreten. Zusätzlich erhält die Absperrarmatur die jeweils Positiven und gewünschten Eigenschaften der Materialien Metall und Kunststoff, wobei die jeweilige Beschichtung ausreichende Beständigkeit aufweist und für Lebensmittel (hier Trinkwasser) zugelassen ist.

Ferner kann die Absperrarmatur wesentlich kostengünstiger hergestellt werden, als eine Absperrarmatur aus Rotguß.

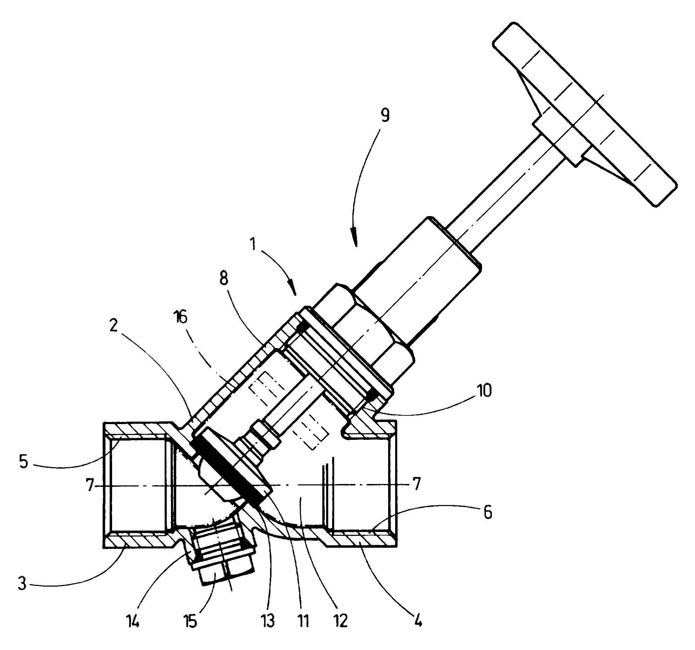

Die Erfindung wird nunmehr anhand der Zeichnung, die beispielsweise als Absperrarmatur im Schnitt ein Schrägsitzventil zeigt, erläutert.

Die in der Zeichnung dargestellte Absperrarmatur (Schrägsitzventil) 1 weist ein Gehäuse 2 mit zwei koaxial zueinander angeordneten Anschluß-Gewindestutzen 3, 4 (hier z.B. beide mit Innengewinde 5, 6) auf. Schräg zur Mittelachse 7-7 ist ein weiterer Stutzen 8 zur Aufnahme eines Ventil-Oberteils 9 angeordnet. Das Ventil-Oberteil 9 ist in ein Innengewinde 10 des Stutzens 8 eingesetzt, wobei der Ventil-Kegel 11 bei geschlossener Stellung die Absperrarmatur 1 an einem schräg in einer Längsmittelbohrung 12 zwischen den Anschluß-Gewindestutzen 3, 4 sitzenden Ventil-Sitz 13 absperrt. Am unteren Ende der Absperrarmatur 1 ist ein Entleerungsstutzen 14 mit einem Entleerungsstopfen 15 vorgesehen, wobei seitlich an der Absperrarmatur 1 ein weiterer Entleerungsstutzen mit einem Entleerungsventil angeordnet sein kann (nicht dargestellt).

Das Roh-Gehäuse ist vor der mechanischen Bearbeitung desselben mit einer korrosionsbeständigen Innenbeschichtung 16 versehen. Diese Innenbeschichtung 16 ist entweder eine Pulverbeschichtung oder eine Tauchbeschichtung.

Nach der Beschichtung der Innenflächen werden die Innengewinde 5, 6 der Anschluß-Gewindestutzen 3, 4, das Innengewinde 10 des Stutzens 8 für das Ventil-Oberteil 9 sowie die Innengewinde der Entleerungsstutzen 15 geschnitten. Damit die notwendigen Gewindetoleranzen gewahrleistet werden, sollte diese mechanische Bearbeitung nach der Beschichtung erfolgen, so daß es auch nicht durch Zusetzen der einzelnen Gewindegänge zu Montageproblemen kommen kann. Um eine Verteuerung zu vermeiden, ist die Abdeckung der fertiggestellten Gewinde vor der Beschichtung wenig sinnvoll.

Die Innengewinde 5, 6 der Anschluß-Gewindestutzen 3, 4, das Innengewinde 10 des Stutzens 8 sowie die Innengewinde der Entleerungsstutzen 15 stehen im montierten Zustand nicht mit dem Wasser in Verbindung, da sie durch die eingeschraubten Rohrelemente, Ventil-Oberteil 9, Entleerungsstopfen 15 und Entleerungsventil abgedeckt werden. Daher ist durch die nachträgliche mechanische Bearbeitung keine Verletzung des Korrosionsschutzes zu sehen.

## Patentansprüche

1. Absperrarmatur für Wasserleitungen o.dgl. mit einem Gehäuse und einem Ventil-Oberteil, dadurch gekennzeichnet, daß das Roh-Gehäuse mit einer vor der mechanischen Bearbeitung aufgebrachten korrosionsbeständigen Innenbeschichtung (16) versehen ist.

2. Absperrarmatur nach Anspruch 1, dadurch gekennzeichnet, daß die Innenbeschichtung (16) eine Pulverbeschichtung ist.

3. Absperrarmatur nach Anspruch 1, dadurch gekennzeichnet, daß die Innenbeschichtung (16) eine Tauchbeschichtung ist.
